# EUROPEAN PATENT APPLICATION

(11) **EP 4 811 088 A1**
(43) Date of publication of application: **23.09.2026**
(21) Application number: 24890736.2
(22) Date of filing: 13.11.2024
(51) Int. Cl.: G06F 3/0481

(54) **INFORMATION DISPLAY METHOD AND APPARATUS, ELECTRONIC DEVICE, STORAGE MEDIUM, AND PROGRAM PRODUCT**

(30) Priority: 16.11.2023 CN 202311533097
(71) Applicant: Beijing Zitiao Network Technology Co., Ltd., Beijing 100190 (CN)
(72) Inventor: HE, Zitong, Beijing 100028 (CN)
(74) Representative: Grünecker Patent- und Rechtsanwälte PartG mbB
(86) International application number: PCT/CN2024/131848
(87) International publication number: WO 2025/103381

(57) **Abstract**

Embodiments of the present disclosure provide an information display method and apparatus, an electronic device, a storage medium, and a program product. The method includes: receiving an information display operation for target media content; and displaying description information of the target media content in response to the information display operation, where the description information includes content summary information and/or chapter information, and the description information is generated by performing content detection on the target media content.

## Description

### CROSS-REFERENCE TO RELATED APPLICATION(S)

The present application claims the priority of Chinese Patent Application No. 202311533097.8, filed on November 16, 2023. The entire teachings of the above application are incorporated herein by reference.

### FIELD

Embodiments of the present disclosure relate to the field of computer technologies, and in particular, to an information display method and apparatus, an electronic device, a storage medium, and a program product.

### BACKGROUND

At present, users may learn about the content of a video by watching the video. However, in the prior art, it takes users more time and energy to learn the video content, and the information acquisition efficiency needs to be improved.

### SUMMARY

Embodiments of the present disclosure provide an information display method and apparatus, an electronic device, a storage medium, and a program product.

In a first aspect, an embodiment of the present disclosure provides an information display method, including:
receiving an information display operation for target media content; and
displaying description information of the target media content in response to the information display operation, where the description information includes content summary information and/or chapter information, and the description information is generated by performing content detection on the target media content.

In a second aspect, an embodiment of the present disclosure further provides an information display apparatus, including:
an operation receiving module, configured to receive an information display operation for target media content; and
an information display module, configured to display description information of the target media content in response to the information display operation, where the description information includes content summary information and/or chapter information, and the description information is generated by performing content detection on the target media content.

In a third aspect, an embodiment of the present disclosure further provides an electronic device, including:
one or more processors; and
a memory, configured to store one or more programs,
where the one or more programs, when executed by the one or more processors, cause the one or more processors to implement the information display method according to embodiments of the present disclosure.

In a fourth aspect, an embodiment of the present disclosure further provides a computer-readable storage medium having a computer program stored thereon. The program, when executed by a processor, implements the information display method according to embodiments of the present disclosure.

In a fifth aspect, an embodiment of the present disclosure further provides a computer program product. The computer program product, when executed by a computer, causes the computer to implement the information display method according to embodiments of the present disclosure.

### BRIEF DESCRIPTION OF THE DRAWINGS

The above and other features, advantages, and aspects of embodiments of the present disclosure will become more apparent in combination with the drawings and with reference to the following specific embodiments. Throughout the drawings, the same or similar reference numbers refer to the same or similar elements. It should be understood that the drawings are schematic and that the components and elements are not necessarily drawn to scale.
FIG. 1 is a schematic flowchart of an information display method according to an embodiment of the present disclosure;
FIG. 2 is a schematic diagram of displaying description information according to an embodiment of the present disclosure;
FIG. 3 is a schematic diagram of displaying another piece of description information according to an embodiment of the present disclosure;
FIG. 4 is a schematic flowchart of another information display method according to an embodiment of the present disclosure;
FIG. 5 is a schematic flowchart of posting optional description information according to an embodiment of the present disclosure;
FIG. 6 is a schematic flowchart of posting another piece of optional description information according to an embodiment of the present disclosure;
FIG. 7 is a block diagram of an information display apparatus according to an embodiment of the present disclosure; and
FIG. 8 is a schematic structural diagram of an electronic device according to an embodiment of the present disclosure.

### DETAILED DESCRIPTION OF EMBODIMENTS

Embodiments of the present disclosure will be described in more detail below with reference to the drawings. Although some embodiments of the present disclosure are shown in the drawings, it should be understood that the present disclosure may be implemented in various forms and should not be construed as limited to the embodiments set forth herein. Instead, these embodiments are provided for a more thorough and complete understanding of the present disclosure. It should be understood that the drawings and embodiments of the present disclosure are only for illustrative purposes, and are not intended to limit the scope of protection of the present disclosure.

It should be understood that steps described in method implementations of the present disclosure may be performed in different order and/or in parallel. In addition, the method implementations may include additional steps and/or omit performing the illustrated steps. The scope of the present disclosure is not limited in this respect.

The term "include/comprise" and its variants used herein are open-ended inclusions, that is, "include/comprise but not limited to". The term "based on" is "at least partially based on". The term "an embodiment" means "at least one embodiment"; the term "another embodiment" means "at least one other embodiment"; the term "some embodiments" means "at least some embodiments". Relevant definitions of other terms will be given in the description below.

It should be noted that concepts such as "first" and "second" mentioned in the present disclosure are only used to distinguish between different apparatuses, modules, or units, and are not used to limit the order or interdependence of functions performed by these apparatuses, modules, or units.

It should be noted that the modifiers "a" and "a plurality of" mentioned in the present disclosure are illustrative and not restrictive, and those skilled in the art should understand that, unless otherwise clearly indicated in the context, they should be understood as "one or more".

The names of messages or information exchanged between a plurality of apparatuses in the implementations of the present disclosure are only for illustrative purposes, and are not intended to limit the scope of these messages or information.

It may be understood that before using the technical solutions disclosed in embodiments of the present disclosure, the user shall be informed of the type, range of use, use scenarios, etc. of personal information involved in the present disclosure in an appropriate manner according to relevant laws and regulations, and the authorization of the user shall be obtained.

For example, in response to receiving an active request from a user, prompt information is sent to the user to clearly prompt the user that the requested operation will require access to and use of the user's personal information. In this way, the user may independently choose, based on the prompt information, whether to provide the personal information to software or hardware, such as an electronic device, an application, a server, or a storage medium, that performs the operations of the technical solutions of the present disclosure.

As an optional but non-limiting implementation, in response to receiving the active request from the user, the prompt information may be sent to the user in the form of, for example, a pop-up window, in which the prompt information may be displayed in text. In addition, the pop-up window may also include a selection control for the user to select "agree" or "disagree" to provide the personal information to the electronic device.

It may be understood that the above process of notifying and obtaining user authorization is only illustrative and does not limit the implementations of the present disclosure, and other manners that satisfy relevant laws and regulations may also be applied to the implementations of the present disclosure.

It may be understood that the data involved in the technical solution (including but not limited to the data itself, acquisition, or use of the data) shall comply with the requirements of corresponding laws, regulations, and related provisions.

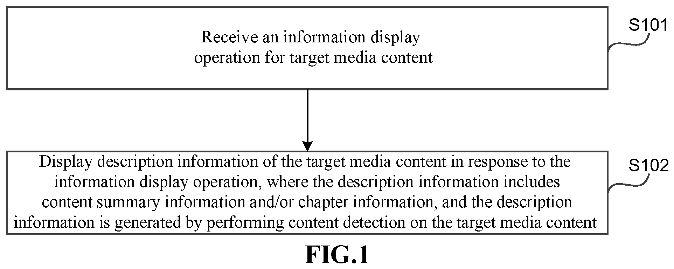

FIG. 1 is a schematic flowchart of an information display method according to an embodiment of the present disclosure. The method is applied to the user side and may be performed by an information display apparatus. The apparatus may be implemented in software and/or hardware, may be configured in an electronic device, and typically may be configured in a mobile phone or a tablet computer. The information display method provided in this embodiment of the present disclosure is applicable to a scenario of displaying content summary information and/or chapter information of media content to a user.

At present, media content (such as a video) lacks a function of performing content summarization and chapter division in batch and automatically, which requires users to spend more time and energy on watching the media content. With an increasing supply of media content, it is difficult for users to obtain the content they want efficiently and quickly.

In view of this, an embodiment of the present disclosure provides an information display method. Through summarization, a user may quickly learn about the content and chapter division of a video, and quickly jump to a position he/she wants to watch, thereby reducing the costs of the user in watching media content, and making a process of watching the media content more efficient and easier.

As shown in FIG. 1, the information display method provided in this embodiment may include:
S101, an information display operation for target media content is received.

The information display operation may be a trigger operation used to indicate the display of description information of certain media content. An execution manner of the information display operation is not limited. Exemplarily, the information display operation may include a progress adjustment operation, a region display operation, an information switching operation for certain media content, or a posting operation of interactive information associated with a preset virtual object, etc. The target media content may be media content corresponding to the information display operation, that is, media content whose description information is indicated to be displayed by the information display operation. The media content may be, for example, video content or picture-text content, and the type of media content is not limited in this embodiment.

In this embodiment, when a current user wants to view description information of certain media content, the current user may perform the information display operation for the media content. Accordingly, a current application may receive the information display operation performed by the current user.

S102, description information of the target media content is displayed in response to the information display operation, where the description information includes content summary information and/or chapter information, and the description information is generated by performing content detection on the target media content.

The description information may be used for describing the target media content, and the description information may include content summary information and/or chapter information. The content summary information may be information obtained by summarizing the content of the target media content, such as the content introduction information of the target media content. The chapter information may be information related to media content chapters of the target media content, such as introductions and names of the media content chapters, and/or time point information corresponding to the media content chapters in the target media content. The time point information corresponding to the media content chapters in the target media content may be used for indicating positions of the media content chapters in the target media content, such as start positions and/or end positions of the media content chapters in the target media content.

The description information may be generated by performing content detection on the target media content, such as analyzing the content of the target media content to obtain the description information of the target media content. Optionally, the description information is generated by a user side or a server side performing content detection on the target media content. For example, the user side or the server side may pre-generate the description information of the target media content through a content detection model, or may generate the description information of the target media content through the content detection model in response to the information display operation of the user. The content detection model may be obtained through pre-training.

In this embodiment, when the information display operation for the target media content is received, the description information of the target media content generated by performing content detection on the target media content may be displayed in response to the information display operation.

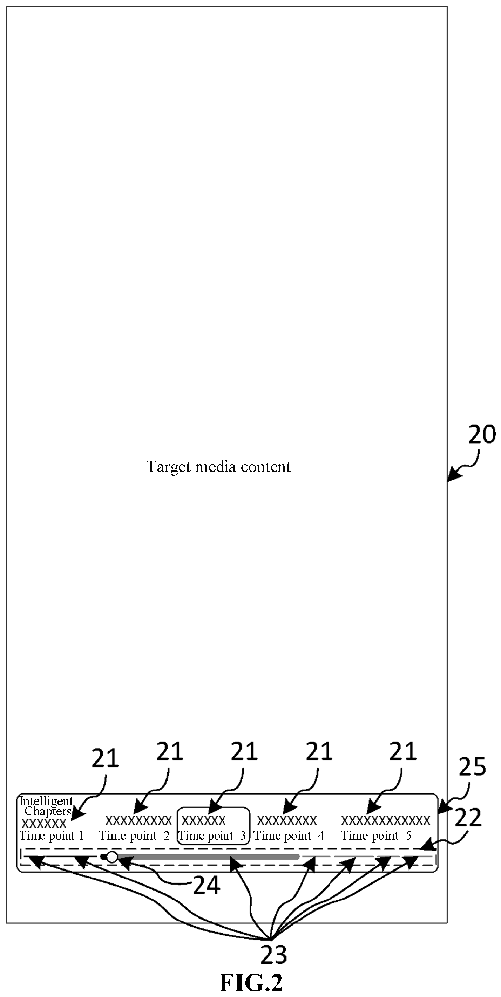

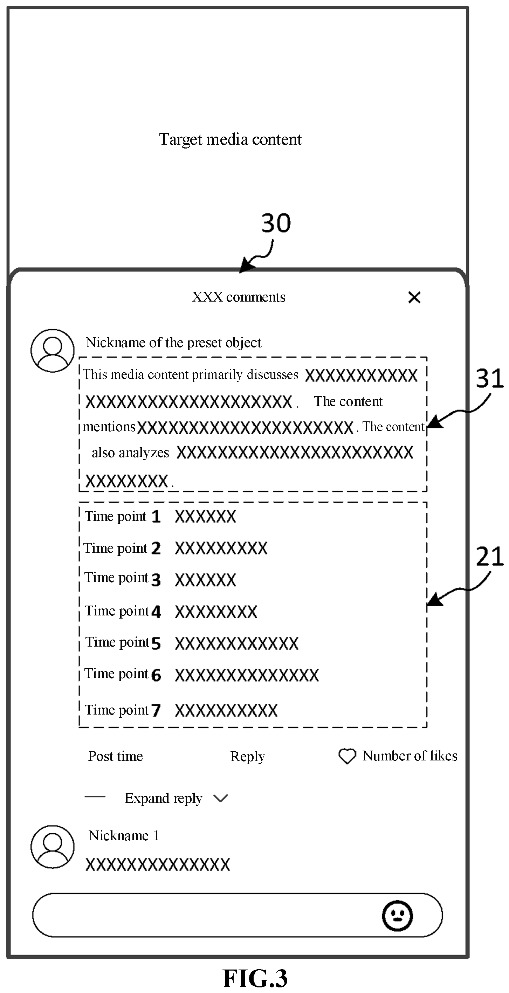

Exemplarily, in response to the information display operation, the description information of the target media content may be displayed at a position corresponding to the information display operation, for example, the chapter information 21 of the target media content may be displayed in an image area 20 of the target media content, as shown in FIG. 2; or the content summary information 31 and the chapter information 21 of the target media content may be displayed in an interactive information area 30 of the target media content, as shown in FIG. 3 (in the figure, the interactive information area 30 is a comment panel as an example).

The information display method provided in this embodiment includes: receiving an information display operation for target media content; and displaying description information of the target media content in response to the information display operation, where the description information includes content summary information and/or chapter information, and the description information is generated by performing content detection on the target media content. According to the technical solution described above, the present embodiment automatically generates the description information of the media content by performing content detection on the media content and displays the description information, without manual content summarization or chapter division, so that a new generation manner of the description information may be provided, and efficiency is improved.

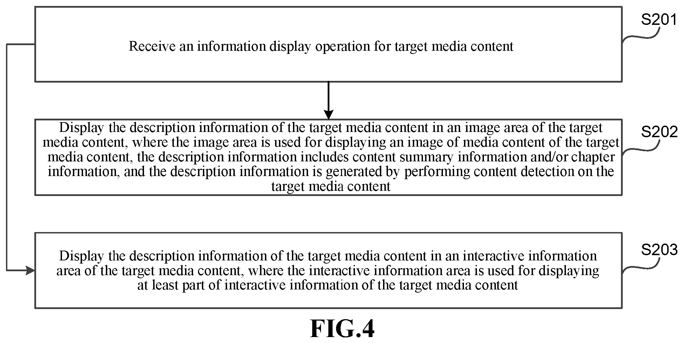

FIG. 4 is a schematic flowchart of another information display method according to an embodiment of the present disclosure. The solution in this embodiment may be combined with one or more optional solutions in the above embodiment. Optionally, the displaying the description information of the target media content includes at least one of the following: displaying the description information of the target media content in an image area of the target media content, where the image area is used for displaying an image of media content of the target media content; or displaying the description information of the target media content in an interactive information area of the target media content, where the interactive information area is used for displaying at least part of interactive information of the target media content.

Accordingly, as shown in FIG. 4, the information display method provided in this embodiment may include:
S201, an information display operation for target media content is received, and S202 or S203 are performed.
S202, the description information of the target media content is displayed in an image area of the target media content, where the image area is used for displaying an image of media content of the target media content, the description information includes content summary information and/or chapter information, and the description information is generated by performing content detection on the target media content.

In some embodiments, when the information display operation for the target media content is received, the description information of the target media content may be displayed in the image area 20 of the target media content in response to the information display operation. For example, the chapter information 20 of the target media content may be displayed in the image area 20 of the target media content, as shown in FIG. 2, so that the user may simultaneously watch the image of the media content of the target media content and the description information in the image area 20. The image area 20 may be understood as an image display area, such as an area in a media content display page for displaying an image of media content.

In this embodiment, the timing of displaying the description information of the target media content in the image area may be set as needed. For example, the description information of the target media content may be displayed in the image area when different information display operations for the target media content are received; or the description information of the target media content may be displayed in the image area when a set information display operation is received, such as when an information display operation associated with the image of the media content of the target media content or the image area is received.

Optionally, the information display operation includes a progress adjustment operation for the target media content. In this case, when the progress adjustment operation acting on the target media content is received, the description information of the target media content may be displayed in the image area of the target media content in response to the progress adjustment operation. When the description information of the target media content is displayed in the image area, exemplarily, the description information may include content summary information and/or chapter information. Optionally, the description information may include chapter information, so that it is convenient for the user to quickly adjust to a media content chapter he/she wants to watch, and excessive occlusion of the image of the media content is avoided.

Exemplarily, the chapter information of the target media content may be displayed in the image area of the target media content during an execution process of the progress adjustment operation and/or within a preset time length after the execution of the progress adjustment operation is completed. When the execution of the progress adjustment operation is completed and/or when a duration since the execution of the progress adjustment operation is completed reaches the preset time length, displaying the chapter information of the target media content in the image area of the target media content is canceled, so as to avoid occluding the user from watching the image of the media content of the target media content.

The progress adjustment operation may be a trigger operation used to indicate adjustment of the current display progress of the target media content, such as a horizontal sliding operation acting in the image area, or a position adjustment operation acting on a progress control or a progress identification on the progress control.

Optionally, a progress control of the target media content is further displayed in the image area, the progress control includes a plurality of sub-controls, the sub-controls correspond to media content chapters of the target media content, and the sub-controls are used for indicating display progress of the media content chapters corresponding to the sub-controls.

The progress control 22 of the target media content may be used for indicating and adjusting the current display progress of the target media content. As shown in FIG. 2, the progress control 22 may include a plurality of sub-controls 23, and different sub-controls 23 may correspond to different media content chapters of the target media content, and are used for indicating and adjusting display progress of the media content chapters corresponding to the sub-controls. A progress identification 24 may further be provided on the progress control 22, so that a currently displayed media content chapter may be indicated by the sub-control 23 in which the progress identification 24 is located, the display progress of the corresponding media content chapter may be indicated by a position of the progress identification 24 on the sub-control 23, and the progress adjustment operation may be performed by adjusting the position of the progress identification 23 on the progress control 22, to adjust the current display progress of the target media content. The sub-control 23 in which the progress identification 24 is currently located (that is, the sub-control 23 corresponding to the currently displayed media content chapter) and the sub-control 23 in which the progress identification 24 is currently not located (that is, the sub-control 23 corresponding to the currently not displayed media content chapter) may have a same or a different display style. Exemplarily, the two may have different display styles, so that it is convenient for the user to quickly determine the currently displayed media content chapter. The media content chapters of the target media content may be divided by the user side or the server side based on the content of the target media content.

In this embodiment, a display position of the chapter information 21 of the target media content in the image area 20 is not limited. Exemplarily, as shown in FIG. 2, the chapter information 21 of the target media content may be displayed at an associated position 25 of the progress control 22 of the target media content, for example, at least part of the chapter information 21 of the target media content is displayed above the progress control 22 of the target media content. In this case, optionally, displaying the description information of the target media content in the image area 20 of the target media content includes: displaying chapter information 21 corresponding to at least part of chapter nodes at an associated position of the progress control 22. The chapter information 21 of the currently displayed media content chapter and the chapter information 21 of the currently not displayed media content chapter may have a same or different display style. Exemplarily, the two may have different display styles, so that it is convenient for the user to quickly determine the chapter information 21 of the currently displayed media content chapter.

S203, the description information of the target media content is displayed in an interactive information area of the target media content, where the interactive information area is used for displaying at least part of the interactive information of the target media content.

In some other embodiments, when the information display operation for the target media content is received, the description information of the target media content may be displayed in the interactive information area 30 of the target media content in response to the information display operation. For example, the content summary information 31 and/or the chapter information 21 of the target media content may be displayed in the interactive information area 30 of the target media content, as shown in FIG. 3, so that it is convenient for the user to quickly learn about the content and/or chapter division involved in the target media content. The interactive information area 30 may be understood as an interactive information display area, that is, an area used for displaying the interactive information of the target media content. Taking the interactive information as comment information as an example, the interactive information area 30 may be a comment information area or a comment panel of the target media content.

In this embodiment, the display manner of the description information is not limited. Optionally, the description information is displayed in the interactive information area in a form of first interactive information of the target media content, and the first interactive information is posted by a preset virtual object. For example, the description information of the target media content may be displayed in the interactive information area in the form of the interactive information of the target media content posted by the preset virtual object, as shown in FIG. 3. The first interactive information may be interactive information posted by the preset virtual object with the description information of the target media content as information content. The preset virtual object may be a preset object used for posting description information automatically generated by the user side or the server side, and it may be a virtual object, such as a preset management account.

When the description information of the target media content is displayed in the interactive information area, exemplarily, the description information may include content summary information and/or chapter information. Optionally, the description information includes the content summary information and the chapter information, the chapter information includes chapter description information of the media content chapters and time point information of the media content chapters in the target media content, and the time point information is used for triggering display of the media content chapters corresponding to the time point information. The chapter description information may be information for describing the corresponding media content chapters, such as titles or introductions of the corresponding media content chapters. The time point information may be information of time points corresponding to the media content chapters in the target media content, such as start time points and/or end time points of the media content chapters in the target media content. The time point information may be used for triggering display of the media content chapters corresponding to the time point information. For example, when it is detected that the user triggers the time point information corresponding to a certain media content chapter, a current display progress of the target media content may be adjusted to a start position of the media content chapter, to display an image of media content of the media content chapter to the user.

In some implementations, when the first interactive information of the target media content has been posted, the first interactive information of the target media content may be displayed in the interactive information area in response to the information display operation. For example, in a case where the interactive information area is not displayed when the interactive information display operation is received, the interactive information area of the target media content may be displayed, and the description information of the target media content is displayed in the interactive information area; and in a case where the interactive information area is displayed when the interactive information display operation is received, the first interactive information may be moved to a preset position of the interactive information area for display. In this case, optionally, the displaying the description information of the target media content in the interactive information area of the target media content includes: displaying the interactive information area of the target media content, and displaying the first interactive information in the interactive information area; or moving the first interactive information to a preset position of the interactive information area for display. The preset position may be, for example, a display position of first interactive information in the interactive information area or a middle position of the interactive information area, which may be specifically set as needed.

In this embodiment, a release timing of the first interactive information may be flexibly set as needed. For example, the server side may generate and release the first interactive information of the target media content when the target media content is posted; or the first interactive information may be posted in response to a posting operation of interactive information associated with the preset virtual object. The interactive information associated with the preset virtual object may be, for example, interactive information that mentions the preset virtual object in information content, such as interactive information @ the preset virtual object in the information content, which may be executed by any user watching the target media content.

In the above implementations, a timing of displaying the posted first interactive information (that is, the description information of the target media content) in the interactive information area may be set as needed. Exemplarily, the posted first interactive information may be displayed in the interactive information area when a preset information display operation is received, such as when a region display operation for the interactive information area of the target media content is received, when an information switching operation acting on the interactive information area is received, or when a first posting operation for second interactive information is received. In this case, optionally, the information display operation includes at least one of a region display operation for the interactive information area, an information switching operation acting on the interactive information area, and a first posting operation for second interactive information, the second interactive information is associated with the preset virtual object, and the first posting operation is performed in a case where the first interactive information has been posted for the target media content. The first posting operation may be a posting operation for the interactive information associated with the preset virtual object performed in the case where the first interactive information has been posted for the target media content. The second interactive information may be interactive information associated with the preset virtual object, for example, the information content of the second interactive information may mention the preset virtual object.

In some other implementations, when the first interactive information has not been posted for the target media content, the first interactive information of the target media content may be additionally displayed in the interactive information area in response to the information display operation. For example, when the information display operation for the target media content is received, if the first interactive information has not been posted for the target media content, the server side may post the first interactive information through the preset virtual object. Accordingly, the current application may additionally display the first interactive information in the interactive information area, for example, display the first interactive information at a position of first interactive information in the interactive information area, for the current user to view. In this case, displaying the description information of the target media content in the interactive information area of the target media content includes: additionally, displaying the first interactive information in the interactive information area of the target media content, where the first interactive information is posted in response to the information display operation.

In the above implementations, a timing of additionally displaying the first interactive information (that is, the description information of the target media content) in the interactive information area may be set as needed. Exemplarily, the first interactive information may be additionally displayed in the interactive information area when a second posting operation for the second interactive information is received. In this case, optionally, the information display operation includes a second posting operation for second interactive information, the second interactive information is associated with the preset virtual object, and the second posting operation is performed in a case where the first interactive information has not been posted for the target media content. The second posting operation may be a posting operation for the interactive information associated with the preset virtual object performed in the case where the first interactive information has not been posted for the target media content.

In this embodiment, in the case where the first interactive information is posted in response to the posting operation of the interactive information associated with the preset virtual object, the server side may post the first interactive information for the target media content every time the posting operation of the interactive information associated with the preset virtual object is received, without considering whether the first interactive information has already been posted for the target media content; or the server side may consider whether the first interactive information has already been posted for the target media content, and only post the first interactive information for the target media content when the first interactive information has not been posted for the target media content, and no longer post the first interactive information for the target media content when the first interactive information has already been posted for the target media content, so as to avoid a situation where there are a plurality of pieces of repeated first interactive information.

In addition, when the posting operation of the current user for the second interactive information is received, the second interactive information may be posted, and the user who performs the posting operation may be prompted, for example, the current user who performs the posting operation may be prompted by posting interactive information associated with the current user, to prompt the user to view the first interactive information that has been posted for the target media content or that is posted in response to the posting operation.

In this case, optionally, the information display method provided in this embodiment may further include: posting second interactive information in response to a posting operation of a current user for the second interactive information, where the posting operation includes the first posting operation and/or the second posting operation; and receiving interactive prompt information for third interactive information, where the interactive prompt information is used for prompting the third interactive information, the third interactive information is posted in a form of reply information of the first interactive information in response to the posting operation, and the third interactive information is associated with the current user.

The third interactive information may be interactive information associated with the current user, which may be posted in response to the first posting operation or the release of the second interactive information. The third interactive information may be posted by the preset virtual object, and may be posted in the form of the reply information of the first interactive information. The third interactive information may be associated with the current user, for example, the current user who performs the first posting operation is mentioned in the information content, and the third interactive information is used for prompting the current user to view the first interactive information posted for the target media content.

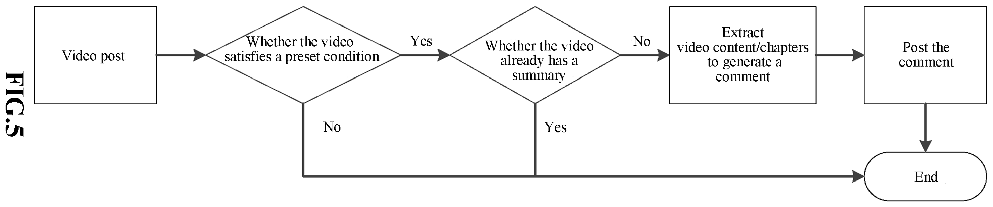

FIG. 5 is a schematic flowchart of posting optional description information according to an embodiment of the present disclosure. Taking the description information being posted by the server side, the target media content being a video, the first interactive information being a comment on the target media content, and a nickname of the preset virtual object being "class representative" as an example, a release process of the description information of the video may be described as follows.

After the video is posted, it is determined whether the video satisfies a preset condition, that is, whether the video satisfies a preset condition for automatically posting a summary (that is, the description information). If the video satisfies the preset condition, it is further determined whether the video already has a summary, that is, whether a comment (that is, the first interactive information) for displaying the summary of the video has been posted. If yes, the release process of the summary ends; if no, video content/chapters may be extracted to generate a comment for displaying the summary, and the comment is posted. Accordingly, if the video does not satisfy the preset condition, the release process of the summary may end.

In addition, in the case where the video does not satisfy the preset condition, when it is detected for the first time that a user @ the class representative (that is, releases the second interactive information) in a comment area (that is, the interactive information area), the video content/chapters may be extracted to generate a comment for displaying the summary, and the comment is posted.

The preset condition may be set as needed, for example, the preset condition may include that a playback volume of the video is greater than a preset playback volume threshold, but is not limited to this. The preset playback volume threshold may be, for example, 5000 or 10000, which is not limited in this embodiment.

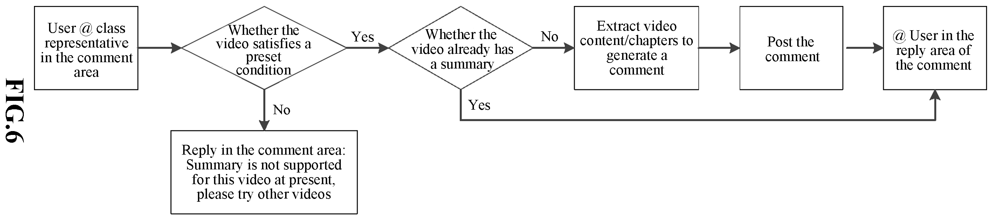

FIG. 6 is a schematic flowchart of posting another piece of optional description information according to an embodiment of the present disclosure. Taking the description information being posted by the server side, the target media content being a video, the first interactive information being a comment on the target media content, and a nickname of the preset virtual object being "class representative" as an example, a release process of the description information of the video may be described as follows.

When it is detected that a user @ the class representative (that is, releases the second interactive information) in the comment area (that is, the interactive information area), it is determined whether the video satisfies a preset condition, that is, whether the video satisfies a preset condition for automatically posting a summary (that is, the description information). If the video satisfies the preset condition, it is further determined whether the video already has a summary, that is, whether a comment (that is, the first interactive information) for displaying the summary of the video has been posted. If yes, @ the user (that is, release the third interactive information associated with the user) in a reply area of the comment; if no, the video content/chapters may be extracted to generate a comment for displaying the summary, the comment is posted, and @ the user in the reply area of the comment. Accordingly, if the video does not satisfy the preset condition, prompt information may be displayed in the comment area, and the user is prompted by the prompt information that the current video does not support summarization.

Exemplarily, for a video that satisfies the preset condition and has no summary, when a user @ the class representative in the comment area, a comment for displaying the summary is generated, and @ the user in the reply area of the comment. In this case, the user may receive an @ reminder in the comment area and/or a notification page. For a video that satisfies the preset condition and already has a summary, when the user @ the class representative in the comment area, @ the user in the reply area of the comment for displaying the summary. In this case, the user may receive an @ reminder in the comment area and/or the notification page. For a video that does not satisfy the preset condition for video screening, when the user releases a comment @ the class representative, the prompt information "Summary is not supported for this video at present, please try other videos" may be displayed.

It may be understood that when it is detected that a user @ the class representative (that is, releases the second interactive information) in the comment area (that is, the interactive information area), it may also be determined directly whether the video already has a summary without considering whether the video satisfies the preset condition, and subsequent operations are performed. In this case, the preset condition for automatically posting the summary may not be set, in other words, whether the preset condition is satisfied or not, the user is supported to view the summary of the video by @ the class representative.

The information display method provided in this embodiment may further enrich display manners of the automatically generated description information, to satisfy different viewing requirements of the user for the description information.

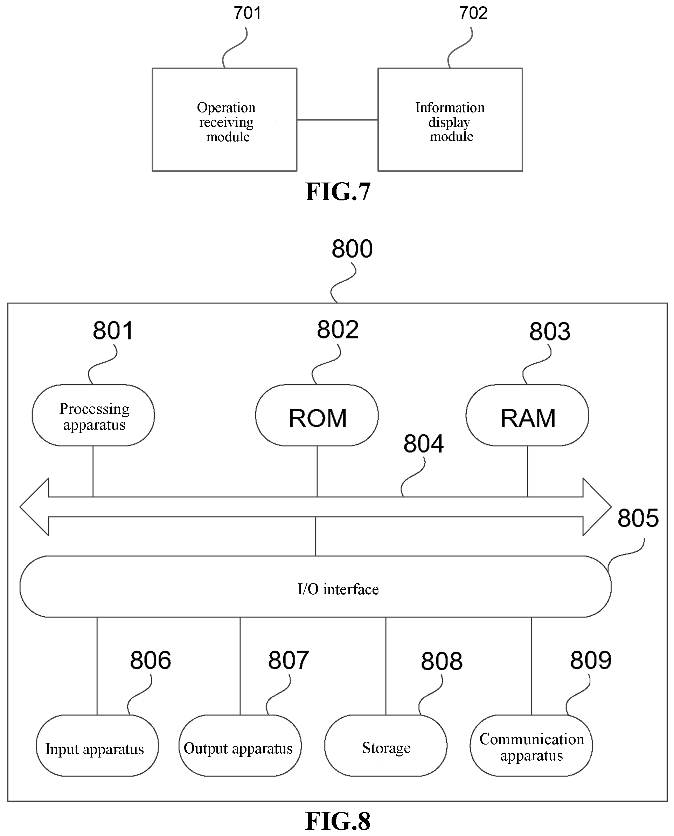

FIG. 7 is a schematic structural diagram of an information display apparatus according to an embodiment of the present disclosure. The apparatus is configured on a user side, and the apparatus may be implemented by software and/or hardware, may be configured in an electronic device, typically in a mobile phone or a tablet computer, and may display content summary information and/or chapter information of media content to a user through an information display method. As shown in FIG. 7, the information display apparatus provided in this embodiment may include an operation receiving module 701 and an information display module 702, where:
the operation receiving module 701 is configured to receive an information display operation for target media content; and
the information display module 702 is configured to display description information of the target media content in response to the information display operation, where the description information includes content summary information and/or chapter information, and the description information is generated by performing content detection on the target media content.

The information display apparatus provided in this embodiment receives an information display operation for target media content through an operation receiving module; and displays description information of the target media content through an information display module in response to the information display operation, where the description information includes content summary information and/or chapter information, and the description information is generated by performing content detection on the target media content. According to the technical solution described above, the present embodiment automatically generates the description information of the media content by performing content detection on the media content and displays the description information, without manual content summarization or chapter division, so that a new generation manner of the description information may be provided, and efficiency is improved.

In the above solution, the information display module 702 may include at least one of the following: a first display unit, configured to display the description information of the target media content in an image area of the target media content, where the image area is used for displaying an image of media content of the target media content; or a second display unit, configured to display the description information of the target media content in an interactive information area of the target media content, where the interactive information area is used for displaying at least part of interactive information of the target media content.

In the above solution, a progress control of the target media content may further be displayed in the image area, the progress control may include a plurality of sub-controls, the sub-controls correspond to media content chapters of the target media content, and the sub-controls may be used for indicating display progress of the media content chapters corresponding to the sub-controls.

In the above solution, the first display unit may be configured to: display chapter information corresponding to at least part of chapter nodes at an associated position of the progress control.

In the above solution, the information display operation may include a progress adjustment operation for the target media content.

In the above solution, the description information may be displayed in the interactive information area in a form of first interactive information of the target media content, and the first interactive information is posted by a preset virtual object.

In the above solution, the second display unit may be configured to: display the interactive information area of the target media content, and display the first interactive information in the interactive information area; or move the first interactive information to a preset position of the interactive information area for display.

In the above solution, the information display operation may include at least one of a region display operation for the interactive information area, an information switching operation acting on the interactive information area, and a first posting operation for second interactive information, the second interactive information is associated with the preset virtual object, and the first posting operation is performed in a case where the first interactive information has been posted for the target media content.

In the above solution, the second display unit may be configured to: additionally, display the first interactive information in the interactive information area of the target media content, where the first interactive information is posted in response to the information display operation.

In the above solution, the information display operation may include a second posting operation for second interactive information, the second interactive information is associated with the preset virtual object, and the second posting operation is performed in a case where the first interactive information has not been posted for the target media content.

Further, the information display apparatus provided in this embodiment may further include an information release module and an information receiving module, where the information release module is configured to release the second interactive information in response to a posting operation of a current user for the second interactive information, where the posting operation includes the first posting operation and/or the second posting operation; and the information receiving module is configured to receive interactive prompt information for third interactive information, where the interactive prompt information is used for prompting the third interactive information, the third interactive information is posted in a form of reply information of the first interactive information in response to the posting operation, and the third interactive information is associated with the current user.

In the above solution, the description information may include the content summary information and the chapter information, the chapter information may include chapter description information of the media content chapters and time point information of the media content chapters in the target media content, and the time point information may be used for triggering display of the media content chapters corresponding to the time point information.

In the above solution, the description information may be generated by performing content detection on the target media content by a user side or a server side.

The information display apparatus provided in this embodiment of the present disclosure may execute the information display method provided in any embodiment of the present disclosure, and has corresponding functional modules and beneficial effects for executing the information display method. For technical details not described in detail in this embodiment, reference may be made to the information display method provided in any embodiment of the present disclosure.

Reference is made to FIG. 8 below, which illustrates a schematic structural diagram of an electronic device 800 (e.g., a terminal device) suitable for implementing an embodiment of the present disclosure. The terminal device in this embodiment of the present disclosure may include, but is not limited to, mobile terminals such as a mobile phone, a notebook computer, a digital broadcast receiver, a personal digital assistant (PDA), a tablet computer (PAD), a portable media player (PMP), and an in-vehicle terminal (e.g., an in-vehicle navigation terminal), and fixed terminals such as a digital television (TV) and a desktop computer. The electronic device shown in FIG. 8 is only an example, and should not impose any limitation on the function and scope of use of the embodiments of the present disclosure.

As shown in FIG. 8, the electronic device 800 may include a processing apparatus 801 (e.g., a central processing unit, a graphics processor, etc.), which may perform various appropriate actions and processing according to a program stored in a read-only memory (ROM) 802 or a program loaded from a storage apparatus 808 into a random-access memory (RAM) 803. The RAM 803 further stores various programs and data required for operations of the electronic device 800. The processing apparatus 801, the ROM 802, and the RAM 803 are interconnected by means of a bus 804. An input/output (I/O) interface 805 is also connected to the bus 804.

Generally, the following apparatuses may be connected to the I/O interface 805: an input apparatus 806 including, for example, a touch screen, a touchpad, a keyboard, a mouse, a camera, a microphone, an accelerometer, and a gyroscope; an output apparatus 807 including, for example, a liquid crystal display (LCD), a speaker, and a vibrator; the storage apparatus 808 including, for example, a magnetic tape and a hard disk; and a communication apparatus 809. The communication apparatus 809 may allow the electronic device 800 to communicate wirelessly or wiredly with other devices to exchange data. Although FIG. 8 shows the electronic device 800 having various apparatuses, it should be understood that it is not required to implement or provide all of the illustrated apparatuses. Alternatively, more or fewer apparatuses may be implemented or provided.

In particular, according to the embodiments of the present disclosure, the process described above with reference to the flowchart may be implemented as a computer software program. For example, this embodiment of the present disclosure includes a computer program product, which includes a computer program carried on a non-transitory computer-readable medium, where the computer program includes program code for performing the method shown in the flowchart. In such an embodiment, the computer program may be downloaded online and installed through the communication apparatus 809, or installed from the storage apparatus 808, or installed from the ROM 802. When the computer program is executed by the processing apparatus 801, the above-mentioned functions defined in the method of this embodiment of the present disclosure are executed.

It should be noted that the above-mentioned computer-readable medium in the present disclosure may be a computer-readable signal medium, a computer-readable storage medium, or any combination thereof. The computer-readable storage medium may be, for example, but is not limited to, an electronic, magnetic, optical, electromagnetic, infrared, or semiconductor system, apparatus, or device, or any combination thereof. More specific examples of the computer-readable storage medium may include, but are not limited to: an electrical connection having one or more wires, a portable computer magnetic disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination thereof. In the present disclosure, the computer-readable storage medium may be any tangible medium that includes or stores a program, and the program may be used by or in combination with an instruction execution system, apparatus, or device. In the present disclosure, the computer-readable signal medium may include a data signal propagated on a baseband or as a part of a carrier wave, and computer-readable program code is carried therein. The data signal propagated in this way may be in a variety of forms, including but not limited to an electromagnetic signal, an optical signal, or any suitable combination thereof. The computer-readable signal medium may also be any computer-readable medium other than the computer-readable storage medium, and the computer-readable signal medium may send, propagate, or transmit the program for use by or in combination with the instruction execution system, apparatus, or device. The program code contained on the computer-readable medium may be transmitted in any suitable medium, including but not limited to a wire, an optical cable, a radio frequency (RF), or any suitable combination thereof.

In some implementations, the client and the server may communicate using any currently known or future developed network protocol, such as the HyperText Transfer Protocol (HTTP), and may be interconnected with any form or medium of digital data communication (for example, a communication network). Examples of the communication network include a local area network ("LAN"), a wide area network ("WAN"), an internet (for example, the Internet), a peer-to-peer network (for example, an ad hoc network), and any network currently known or to be developed in the future.

The above-mentioned computer-readable medium may be contained in the above-mentioned electronic device, or may exist alone without being assembled into the electronic device.

The above-mentioned computer-readable medium carries one or more programs, which, when executed by the electronic device, cause the electronic device to: receive an information display operation for target media content; and display description information of the target media content in response to the information display operation, where the description information includes content summary information and/or chapter information, and the description information is generated by performing content detection on the target media content.

Computer program code for performing operations of the present disclosure may be written in one or more programming languages or a combination thereof, where the one or more programming languages include, but are not limited to, object-oriented programming languages such as Java, Smalltalk, and C++, and further include conventional procedural programming languages such as "C" language or similar programming languages. The program code may be executed entirely on a user computer, partly on the user computer, as a stand-alone software package, partly on the user computer and partly on a remote computer, or entirely on the remote computer or a server. In the case involving the remote computer, the remote computer may be connected to the user computer through any kind of network, including a local area network (LAN) or a wide area network (WAN), or may be connected to an external computer (for example, connected through the Internet using an Internet service provider).

The flowcharts and block diagrams in the drawings illustrate the possibly implemented architectures, functions, and operations of the system, the method, and the computer program product according to various embodiments of the present disclosure. In this regard, each block in the flowchart or block diagram may represent a module, program segment, or part of code, which includes one or more executable instructions for implementing the specified logical functions. It should also be noted that, in some alternative implementations, the functions marked in the blocks may also occur in an order different from that marked in the drawings. For example, two blocks shown in succession may actually be executed substantially in parallel, or they may sometimes be executed in the reverse order, depending on the functions involved. It should also be noted that each block in the block diagram and/or the flowchart, and a combination of the blocks in the block diagram and/or the flowchart, may be implemented by a dedicated hardware-based system that executes specified functions or operations, or may be implemented by a combination of dedicated hardware and computer instructions.

The involved units described in the embodiments of the present disclosure may be implemented in software or hardware. The name of a module does not constitute a limitation on the unit itself under certain circumstances.

The functions described above herein may be performed at least partially by one or more hardware logic components. For example, without limitation, exemplary types of hardware logic components that may be used include: a field programmable gate array (FPGA), an application specific integrated circuit (ASIC), an application specific standard product (ASSP), a system on chip (SOC), a complex programmable logical device (CPLD), etc.

In the context of the present disclosure, a machine-readable medium may be a tangible medium that may include or store a program for use by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer magnetic disk, a hard disk, a random-access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination thereof.

According to one or more embodiments of the present disclosure, Example 1 provides an information display method, including:
receiving an information display operation for target media content; and
displaying description information of the target media content in response to the information display operation, where the description information includes content summary information and/or chapter information, and the description information is generated by performing content detection on the target media content.

According to one or more embodiments of the present disclosure, Example 2 is the method according to Example 1, where the displaying the description information of the target media content includes at least one of the following:
displaying the description information of the target media content in an image area of the target media content, where the image area is used for displaying an image of media content of the target media content; or
displaying the description information of the target media content in an interactive information area of the target media content, where the interactive information area is used for displaying at least part of interactive information of the target media content.

According to one or more embodiments of the present disclosure, Example 3 is the method according to Example 2, where a progress control of the target media content is further displayed in the image area, the progress control includes a plurality of sub-controls, the sub-controls correspond to media content chapters of the target media content, and the sub-controls are used for indicating display progress of the media content chapters corresponding to the sub-controls.

According to one or more embodiments of the present disclosure, Example 4 is the method according to Example 3, where displaying the description information of the target media content in the image area of the target media content includes:
displaying chapter information corresponding to at least part of chapter nodes at an associated position of the progress control.

According to one or more embodiments of the present disclosure, Example 5 is the method according to Example 3, where the information display operation includes a progress adjustment operation for the target media content.

According to one or more embodiments of the present disclosure, Example 6 is the method according to Example 2, where the description information is displayed in the interactive information area in a form of first interactive information of the target media content, and the first interactive information is posted by a preset virtual object.

According to one or more embodiments of the present disclosure, Example 7 is the method according to Example 6, where displaying the description information of the target media content in the interactive information area of the target media content includes:
displaying the interactive information area of the target media content, and displaying the first interactive information in the interactive information area; or
moving the first interactive information to a preset position of the interactive information area for display.

According to one or more embodiments of the present disclosure, Example 8 is the method according to Example 7, where the information display operation includes at least one of a region display operation for the interactive information area, an information switching operation acting on the interactive information area, and a first posting operation for second interactive information, the second interactive information is associated with the preset virtual object, and the first posting operation is performed in a case where the first interactive information has been posted for the target media content.

According to one or more embodiments of the present disclosure, Example 9 is the method according to Example 6, where displaying the description information of the target media content in the interactive information area of the target media content includes:
additionally, displaying the first interactive information in the interactive information area of the target media content, where the first interactive information is posted in response to the information display operation.

According to one or more embodiments of the present disclosure, Example 10 is the method according to Example 9, where the information display operation includes a second posting operation for second interactive information, the second interactive information is associated with the preset virtual object, and the second posting operation is performed in a case where the first interactive information has not been posted for the target media content.

According to one or more embodiments of the present disclosure, Example 11 is the method according to any of Examples 6-10, further including:
posting the second interactive information in response to a posting operation of a current user for the second interactive information, where the posting operation includes the first posting operation and/or the second posting operation; and
receiving interactive prompt information for third interactive information, where the interactive prompt information is used for prompting the third interactive information, the third interactive information is posted in a form of reply information of the first interactive information in response to the posting operation, and the third interactive information is associated with the current user.

According to one or more embodiments of the present disclosure, Example 12 is the method according to any one of Examples 6-10, where the description information includes the content summary information and the chapter information, the chapter information includes chapter description information of the media content chapters and time point information of the media content chapters in the target media content, and the time point information is used for triggering display of the media content chapters corresponding to the time point information.

According to one or more embodiments of the present disclosure, Example 13 is the method according to any one of Examples 1-10, where the description information is generated by performing content detection on the target media content by a user side or a server side.

According to one or more embodiments of the present disclosure, Example 14 provides an information display apparatus, including:
an operation receiving module, configured to receive an information display operation for target media content; and
an information display module, configured to display description information of the target media content in response to the information display operation, where the description information includes content summary information and/or chapter information, and the description information is generated by performing content detection on the target media content.

According to one or more embodiments of the present disclosure, Example 15 provides an electronic device, including:
one or more processors; and
a memory, configured to store one or more programs,
where the one or more programs, when executed by the one or more processors, cause the one or more processors to implement the information display method according to any one of Examples 1-13.

According to one or more embodiments of the present disclosure, Example 16 provides a computer-readable storage medium, having a computer program stored thereon. The program, when executed by a processor, implements the information display method according to any of Examples 1-13.

According to one or more embodiments of the present disclosure, Example 17 provides a computer program product, which, when executed by a computer, causes the computer to implement the information display method according to any of Examples 1-13.

The above description is only preferred embodiments of the present disclosure and an explanation of the applied technical principles. Those skilled in the art should understand that the scope of disclosure involved in the present disclosure is not limited to the technical solution formed by the specific combination of the above technical features, and should also cover other technical solutions formed by any combination of the above technical features or their equivalent features without departing from the above-disclosed concept. For example, the above features and the technical features with similar functions disclosed in the present disclosure (but not limited to) may be replaced with each other to form a technical solution.

In addition, although the operations have been described in a particular order, this should not be understood as requiring the operations to be performed in the particular order shown or in a sequential order. Under certain circumstances, multitasking and parallel processing may be advantageous. Similarly, although several specific implementation details are included in the above discussion, these should not be construed as limiting the scope of the present disclosure. Certain features described in the context of separate embodiments may also be implemented in a single embodiment in combination. Conversely, various features described in the context of a single embodiment may also be implemented in a plurality of embodiments individually or in any suitable sub-combination.

Although the subject matter has been described in a language specific to structural features and/or logical actions of the method, it should be understood that the subject matter defined in the appended claims is not necessarily limited to the specific features or actions described above. On the contrary, the specific features and actions described above are only exemplary forms of implementing the claims.

## Claims

1. An information display method, wherein the method is applied at a user side, and the method comprises:
receiving an information display operation for target media content; and
displaying, in response to the information display operation, description information of the target media content, wherein the description information comprises content summary information and/or chapter information, and the description information is generated by performing content detection on the target media content.

2. The method of claim 1, wherein displaying the description information of the target media content comprises at least one of:
displaying the description information of the target media content in an image area of the target media content, wherein the image area is used for displaying an image of media content of the target media content; or
displaying the description information of the target media content in an interactive information area of the target media content, wherein the interactive information area is used for displaying at least part of interactive information of the target media content.

3. The method of claim 2, wherein a progress control of the target media content is further displayed in the image area, the progress control comprises a plurality of sub-controls, the sub-controls correspond to media content chapters of the target media content, and the sub-controls are used for indicating display progress of the media content chapters corresponding to the sub-controls.

4. The method of claim 3, wherein displaying the description information of the target media content in the image area of the target media content comprises:
displaying chapter information corresponding to at least part of chapter nodes at an associated position of the progress control.

5. The method of claim 3, wherein the information display operation comprises a progress adjustment operation for the target media content.

6. The method of claim 2, wherein the description information is displayed in the interactive information area in a form of first interactive information of the target media content, and the first interactive information is posted by a preset virtual object.

7. The method of claim 6, wherein displaying the description information of the target media content in the interactive information area of the target media content comprises:
displaying the interactive information area of the target media content, and displaying the first interactive information in the interactive information area; or
moving the first interactive information to a preset position of the interactive information area for displaying.

8. The method of claim 7, wherein the information display operation comprises at least one of a region display operation for the interactive information area, an information switching operation acting on the interactive information area, and a first posting operation for second interactive information, the second interactive information is associated with the preset virtual object, and the first posting operation is performed in a case that the first interactive information has been posted for the target media content.

9. The method of claim 6, wherein displaying the description information of the target media content in the interactive information area of the target media content comprises:
additionally displaying the first interactive information in the interactive information area of the target media content, wherein the first interactive information is posted in response to the information display operation.

10. The method of claim 9, wherein the information display operation comprises a second posting operation for second interactive information, the second interactive information is associated with the preset virtual object, and the second posting operation is performed in a case that the first interactive information has not been posted for the target media content.

11. The method of any of claims 6-10, further comprising:
posting, in response to a posting operation of a current user for the second interactive information, the second interactive information, wherein the posting operation comprises a first posting operation and/or the second posting operation; and
receiving interactive prompt information for third interactive information, wherein the interactive prompt information is used for prompting the third interactive information, the third interactive information is posted in a form of reply information of the first interactive information in response to the posting operation, and the third interactive information is associated with the current user.

12. The method of any of claims 6-10, wherein the description information comprises the content summary information and the chapter information, the chapter information comprises chapter description information of the media content chapters and time point information of the media content chapters in the target media content, and the time point information is used for triggering display of the media content chapters corresponding to the time point information.

13. The method of any of claims 1-10, wherein the description information is generated by performing content detection on the target media content by a user side or a server side.

14. An information display apparatus, wherein the apparatus is configured at a user side, and the apparatus comprises:
an operation receiving module, configured to receive an information display operation for target media content; and
an information display module, configured to display, in response to the information display operation description information of the target media content, wherein the description information comprises content summary information and/or chapter information, and the description information is generated by performing content detection on the target media content.

15. An electronic device, comprising:
at least one processor; and
a memory communicatively connected to the at least one processor,
wherein the memory stores a computer program executable by the at least one processor, the computer program, when executed by the at least one processor, causes the at least one processor to execute the information display method of any of claims 1-13.

16. A computer-readable storage medium, wherein the computer-readable storage medium stores computer instructions that, when executed by a processor, cause the information display method of any of claims 1-13 to be implemented.

17. A computer program product, wherein the computer program product comprises a computer program, that, when executed by a processor, implements the information display method of any of claims 1-13.
